(19) Europäisches Patentamt
European Patent Office
Office européen des brevets

(11) **EP 3 069 188 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **14798837.2**

(22) Anmeldetag: **13.11.2014**

(51) Int Cl.:
**G02B 21/00** (2006.01)      **G02B 21/36** (2006.01)
**G02B 27/00** (2006.01)      **G02B 21/02** (2006.01)
**G02B 21/33** (2006.01)

(86) Internationale Anmeldenummer:
**PCT/EP2014/074488**

(87) Internationale Veröffentlichungsnummer:
**WO 2015/071362 (21.05.2015 Gazette 2015/20)**

(54) **OPTISCHES ÜBERTRAGUNGSSYSTEM UND MIKROSKOP MIT EINEM SOLCHEN ÜBERTRAGUNGSSYSTEM**

OPTICAL TRANSMISSION SYSTEM AND MICROSCOPE WITH SUCH A TRANSMISSION SYSTEM

SYSTÈME DE TRANSMISSION OPTIQUE ET MICROSCOPE PRÉSENTANT UN TEL SYSTÈME DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013112600**

(43) Veröffentlichungstag der Anmeldung:
**21.09.2016 Patentblatt 2016/38**

(73) Patentinhaber: **Carl Zeiss Microscopy GmbH**
**07745 Jena (DE)**

(72) Erfinder:
• **DEGEN, Artur**
**07743 Jena (DE)**
• **GÖLLES, Michael**
**07745 Jena (DE)**
• **SIEBENMORGEN, Jörg**
**07743 Jena (DE)**
• **LIPPERT, Helmut**
**07745 Jena (DE)**
• **KALKBRENNER, Thomas**
**07745 Jena (DE)**
• **KLEPPE, Ingo**
**07749 Jena (DE)**

• **WALD, Matthias**
**07751 Jena (DE)**
• **WITTIG, Lars-Christian**
**07745 Jena (DE)**
• **SINGER, Wolfgang**
**73431 Aalen (DE)**
• **WOLLESCHENSKY, Ralf**
**07743 Jena (DE)**

(74) Vertreter: **Patentanwälte Geyer, Fehners & Partner mbB**
**Sellierstrasse 1**
**07745 Jena (DE)**

(56) Entgegenhaltungen:
**EP-A1- 2 587 295      WO-A2-2012/122027**
**DE-B- 1 037 719      DE-C- 2 746**
**US-A- 4 412 723      US-A1- 2006 028 737**

• **DIWAKAR TURAGA ET AL: "Aberrations and their correction in light-sheet microscopy: a low-dimensional parametrization", BIOMEDICAL OPTICS EXPRESS, Bd. 4, Nr. 9, 1. September 2013 (2013-09-01), Seite 1654, XP055165538, ISSN: 2156-7085, DOI: 10.1364/BOE.4.001654**

EP 3 069 188 B1

**Beschreibung**

Die Erfindung betrifft ein optisches Übertragungssystem mit mindestens einer Linse, welches einen ausgewählten Bereich einer Probe, welche in einem ersten Medium in einer Objektebene auf oder in einem mindestens teilweise als planparallele Platte ausgebildeten Probenträger angeordnet ist, aus der Objektebene in eine Zwischenbildebene in einem zweiten Medium abbildend ausgestaltet ist. Bei der Abbildung befindet sich die planparallele Platte zwischen dem optischen Übertragungssystem und dem Bereich der Probe, die Objektebene und die Zwischenbildebene schließen mit einer optischen Achse des Übertragungssystems einen Winkel zwischen 0° und 90° ein, wobei auch die das Intervall begrenzenden Winkel eingestellt werden können. Die Abbildung durch das optische Übertragungssystem kann optional objekttreu erfolgen, was bedeutet, dass das Übertragungssystem im Zusammenspiel mit den Medien in einem vorgebebenen Volumenbereich eine sowohl in der Tiefe als auch in der lateralen Ausdehnung maßstabsgetreue Abbildung realisiert. Der Maßstab der Abbildung ergibt sich dabei aus dem Verhältnis der Brechungsindizes der beiden Medien zueinander, d.h. die Vergrößerung beträgt $M = n_1/n_2$, wobei $n_1$ der Brechungsindex des ersten Mediums und $n_2$ der Brechungsindex des zweiten Mediums ist.

Im Stand der Technik sind verschiedene mikroskopische Verfahren bekannt, bei denen eine auf einem Probenträger oder in einem abgedeckten Probengefäß befindliche Probe so beobachtet wird, dass das Licht nicht senkrecht durch den Probenträger oder die Abdeckung des Probengefäßes, die in diesem Bereich, durch den das Licht durchtritt, in der Regel die Eigenschaften einer planparallelen Platte aufweisen, sondern schräg hindurchtritt - die Objektebene, d.h. die Fokusebene des für die Beobachtung verwendeten Objektivs, schließt mit der Ebene, in der die Großflächen der planparallelen Platte liegen, einen von Null verschiedenen Winkel ein. Dies führt zu Ungenauigkeiten bei der Abbildung, schon bei geringen numerischen Aperturen wie NA = 0,3 - in Wasser - kommt es zu extremen Abbildungsfehlern wie beispielsweise zur sphärischen Aberrationen und zu Koma. Mit Standardobjektiven allein lässt sich dann bei den geforderten hohen Auflösungen keine zufriedenstellende Bildgebung mehr erreichen.

Ein Verfahren, bei dem solche, durch schrägen Lichtdurchtritt verursachte Aberrationen für bestimmte Aufbauten auftreten, ist die Lichtblattmikroskopie. Lichtblattmikroskope werden insbesondere bei der Untersuchung von biologischen Proben eingesetzt. Die Beleuchtung der Probe erfolgt dabei mit einem Lichtblatt, dessen Ebene die optische Achse der Detektion in einem von Null verschiedenen Winkel schneidet. Die Objektive sind jeweils in einem Winkel von 45° zur Normalen der Großflächen der planparallelen Platte von oben oder unten auf die Probe gerichtet. Ein solcher Aufbau wird beispielsweise in der WO 2012/110488 A2 und in der WO 2012/112027 A2 beschrieben. Üblicherweise schließt das Lichtblatt mit der Detektionsrichtung, welche in der Regel der optischen Achse des Detektionsobjektivs entspricht, einen rechten Winkel ein. Mit dieser auch aus SPIM (*Selective Plane Illumination Microscopy*) bezeichneten Technik lassen sich in relativ kurzer Zeit räumliche Aufnahmen auch dickerer Proben erstellen. Auf der Basis von optischen Schnitten kombiniert mit einer Relativbewegung in einer Richtung senkrecht zur Schnittebene ist eine bildliche, räumlich ausgedehnte Darstellung der Probe möglich.

Die SPIM-Technik wird bevorzugt in der Fluoreszenzmikroskopie eingesetzt, dort wird sie als LSFM (*Light Sheet Fluorescence Microscopy*) bezeichnet. Gegenüber anderen etablierten Verfahren wie der konfokalen Laser-Scanning-Mikroskopie oder der Zwei-Photonen-Mikroskopie weist die LSFM-Technik mehrere Vorzüge auf: Da die Detektion im Weitfeld erfolgen kann, lassen sich größere Probenbereiche erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Proben bei diesem Verfahren am geringsten, was unter anderem die Gefahr des Ausbleichens einer Probe reduziert, da die Probe nur durch ein dünnes Lichtblatt in einem von Null verschiedenen Winkel beleuchtet wird.

Dabei kann sowohl ein statisches Lichtblatt, welches beispielsweise mit Hilfe von Zylinderlinsen erzeugt wird, verwendet werden, als auch ein quasi-statisches Lichtblatt. Letzteres kann erzeugt werden, indem die Probe mit einem Lichtstrahl schnell abgetastet wird. Die lichtblattartige Beleuchtung entsteht, indem der Lichtstrahl einer schnellen Relativbewegung zu der beobachteten Probe unterworfen wird, und dabei zeitlich aufeinanderfolgend mehrfach aneinandergereiht wird. Dabei wird die Integrationszeit der Kamera, auf deren Sensor die Probe letztendlich abgebildet wird, so gewählt, dass die Abtastung innerhalb der Integrationszeit abgeschlossen wird. Anstelle einer Kamera mit einem zweidimensionalen Sensorfeld kann auch ein Zeilensensor in Kombination mit einem erneuten Abtasten in der Detektionsoptik verwendet werden. Die Detektion kann außerdem auch konfokal erfolgen.

Die SPIM-Technik ist in der Literatur inzwischen vielfach beschrieben, beispielsweise in der DE 102 57 423 A1 und der darauf aufbauenden WO 2004/053558 A1 oder in dem Übersichtsartikel "Selective Plane Illumination Microscopy Techniques in Developmental Biology" von J.Huisken et al., erschienen im Jahr 2009 in der Zeitschrift Development, Bd. 136, S. 1963.

Eine der Hauptanwendungen der Lichtblattmikroskopie liegt in der Bildgebung mittelgroßer Organismen mit einer Größe von einigen 100 $\mu$m bis hin zu wenigen mm. In der Regel werden diese Organismen in ein Agarose-Gel eingebettet, welches sich wiederum in einer Glaskapillare befindet. Die Glaskapillare wird von oben bzw. von unten in eine wassergefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjektiv, das senkrecht zum Lichtblatt und damit auch senkrecht zur Lichtblattoptik steht, auf den Detektor einer Kamera abgebildet.

Diese Methode der Lichtblattmikroskopie hat drei große Nachteile. Zum einen sind die zu untersuchenden Proben relativ groß, da sie aus der Entwicklungsbiologie stammen. Aufgrund der Probenpräparation und der Abmessungen der Probenkammer ist zudem das Lichtblatt relativ dick und somit wird die erzielbare axiale Auflösung eingeschränkt. Schließlich ist auch die Probenpräparation aufwendig und nicht kompatibel zu Standard-Probenpräparationen und Standard-Probenhalterungen, wie sie in der Fluoreszenzmikroskopie zur Untersuchung einzelner Zellen üblich sind.

Um diese Einschränkungen zumindest teilweise umgehen zu können, wurde in den letzten Jahren ein SPIM-Aufbau realisiert, bei dem das Beleuchtungsobjektiv und das Detektionsobjektiv senkrecht zueinander stehen und unter einem Winkel von jeweils 45° zu der Normalen einer Bezugsfläche von oben auf die Probe gerichtet sind. Ein solcher Aufbau wird beispielsweise in der WO 2012/110488 A2 und in der WO 2012/112027 A2 beschrieben.

Die Probe befindet sich bei solchen Aufbauten beispielsweise auf den Boden einer Petrischale, welche mit Wasser gefüllt ist. Beleuchtungsobjektiv und Detektionsobjektiv werden in die Flüssigkeit eingetaucht, das Wasser übernimmt auch die Funktion einer Immersionsflüssigkeit. Dieser Ansatz bietet den Vorteil einer höheren Auflösung in axialer Richtung, da ein dünneres Lichtblatt erzeugt werden kann. Aufgrund der höheren Auflösung können dann auch kleinere Proben untersucht werden. Auch ist die Probenpräparation bedeutend einfacher geworden. Dennoch entsprechen Präparation und Halterungen für die Proben weiterhin noch nicht dem Standard, wie er in der Fluoreszenzmikroskopie bei einzelnen Zellen derzeit gilt: So muss die Petrischale relativ groß sein, damit die beiden Objektive in die Schale eingetaucht werden können, ohne an den Rand der Schale anzustoßen. Mikrotiterplatten - auch als *Multi-Well*Platten bezeichnet - sind der Standard in vielen Bereichen der Biologie und werden gerade auch bei der fluoreszenzmikroskopischen Analyse einzelner Zellen eingesetzt, können mit dem beschriebenen Verfahren jedoch nicht verwendet werden, da die Objektive nicht in die sehr kleinen Vertiefungen, welche rasterförmig auf der Platte angeordnet sind, eintauchen können. Ein weiterer Nachteil besteht darin, dass mit diesem Aufbau eine Analyse einer Vielzahl von Proben in kurzer Zeit - ein sogenanntes *High-Throughput-Screening* - nicht ohne weiteres möglich ist, da die Objektive beim Wechseln der Probe gereinigt werden müssen, um Kontaminierungen der verschiedenen Proben zu vermeiden.

Ein Weg zur Beseitigung dieser Nachteile liegt darin, auf der einen Seite die Konfiguration der Winkel von jeweils 45° beizubehalten, aber die beiden Objektive nicht von oben auf die Probe zu richten, sondern nach Art eines inversen Mikroskops von unten, wo Beleuchtung und Detektion dann durch den transparenten Boden des Probengefäßes oder allgemein des Probenträgers erfolgen. Äquivalent kann die Detektion auch weiterhin von oben erfolgen, sofern das Probengefäß mittels eines transparenten Deckels abgedeckt ist. Auf diese Weise können alle typischen Probengefäße, wie beispielsweise Mikrotiterplatten, Petrischalen und Objektträger benutzt werden, insbesondere eine Kontaminierung der Proben bei einer Analyse mit hohem Durchsatz ist nicht mehr möglich.

Jedoch kommt es aufgrund der Tatsache, dass das Beobachtungs- oder Detektionslicht durch den Probenträger oder sein Deckglas hindurchtreten muss, schon bei geringen numerischen Aperturen wie NA = 0,3 in Wasser zu extremen Abbildungsfehlern, wie beispielsweise sphärischer Aberration, Koma und Astigmatismus aufgrund dieses schrägen Durchgangs. Eine korrekte Bildgebung bei der Nutzung von Standardobjektiven ist auf diese Weise nicht mehr möglich.

Im Stand der Technik sind verschiedene Ansätze beschrieben, wie man das Problem der Aberrationen bei schiefem Lichtdurchtritt lösen kann, wobei das Lichtblattmikroskop nur eine von mehreren mikroskopischen Anordnungen ist, bei der schräger Lichtdurchtritt eine Rolle spielt, schräger Lichtdurchtritt kann beispielsweise auch bei materialmikroskopischen Anwendungen von Bedeutung sein. In der deutschen Patentanmeldung Nr. 10 2013 107 297.6 wird vorgeschlagen, Korrekturmittel in Form von Korrekturlinsen oder Linsengruppen in das jeweilige Mikroskopobjektiv zu integrieren. Als Korrekturlinsen werden dort beispielsweise Zylinderlinsen, gegen die optische Achse verkippte Linsen oder nicht axial angeordnete Linsen vorgeschlagen, wobei die Korrekturlinsen auch solche Elemente mit asphärischen Flächen oder mit Freiformflächen umfassen. Zusätzlich werden für den Objektträger Materialien verwendet, die annähernd den Brechungsindex des Immersionsmediums haben, wobei zur Beseitigung weiterer Fehler adaptive optische Elemente zur Manipulation der Phasenfronten des Beleuchtungs- und / oder des Detektionslichtes vorgeschlagen werden. Dies hat jedoch zur Folge, dass die Objektive mindestens teilweise neu entworfen werden müssen, es handelt sich also um eine recht aufwendige Lösung.

In der US 2011/0261446 A1 wird ein Aufbau beschrieben, welcher ein Übertragungssystem beschreibt, welches aus einer spiegelsymmetrischen Aneinanderkopplung zweier abbildender Systeme besteht. Die beiden abbildenden Systeme sind bezüglich ihrer optischen Elemente spiegelsymmetrisch angeordnet, wobei die Spiegelebene der ursprünglichen Bildebene des ersten abbildenden Systems entspricht, bei der bei schrägem Lichtdurchtritt der beleuchtete Bereich der Probe im Bild die Bildebene schräg schneidet. Die Vergrößerung des Übertragungssystems wird so gewählt, dass sie dem Verhältnis der Brechzahlen eines ersten Mediums, in dem sich die Probe befindet, zu einem zweiten Medium, in dem das Zwischenbild lokalisiert ist, entspricht. Die Objektebene kann auf diese Weise bezüglich der Zwischenbildebene unverzerrt und nur unwesentlich vergrößert dargestellt werden. Um eine vergrößerte Darstellung der Probe zu erhalten, wird ein Mikroskopobjektiv so positioniert, dass seine optische Achse senkrecht auf der Zwischenbildebene steht und das Mikroskopobjektiv auf die Zwischenebene fokussiert ist. Auf diese Weise kann eine unverzerrte Abbildung der Probe, d.h. eine Abbildung frei von Aberrationen mit einer vom Mikroskop abhängigen Vergrößerung auf einen Detektor erfolgen.

Diese Vorgehensweise, ein Übertragungssystem zu verwenden, wird in der deutschen Patentanmeldung 10 2013 107 297.6 weiter verbessert, indem die Verwendung von katadioptrischen Linsen vorgeschlagen wird. Auf diese Weise kann die Anzahl der für das Übertragungssystem verwendeten Linsen reduziert werden, die Baueinheit kann kompakter gestaltete werden. Zusätzlich wird noch die Verwendung eines zweiten Mediums vorgeschlagen, in welchem sich die Zwischenbildebene befindet, und welches ebenfalls mit dem Übertragungssystem in Kontakt steht, so dass es als Immersionsmittel wirkt. Auch diese Lösung verwendet jedoch noch eine Vielzahl von Linsen, aufgrund der Größe des Übertragungssystems ist auch hier eine Integration in bestehende Aufbauten nur schwer möglich. Grundsätzlich können bei der Verwendung eines solchen Übertragungssystems jedoch bereits vorhandene Objektive weiterbenutzt werden.

Andererseits ist es möglich, Abbildungsfehler bereits mit sehr wenig Linsen zu korrigieren, wie beispielsweise in der US 4,412,723 beschrieben ist. Dort ist eine einzige Linse beschrieben, die ausreicht, Abbildungsfehler, die entstehen, wenn die Objektebene nicht parallel zu einer Großfläche eines Strahlteilers liegt, das Licht also unter einem von Null verschiedenen Winkel durch diesen Strahlteiler tritt.

Fasst man den Strahlteiler, der als planparallele Platte ausgestaltet ist, als Probenträger auf, so ist diese einzelne Korrekturlinse jedoch zwischen dem Bereich der Probe, der abgebildet werden soll, also der Objektebene oder auch Fokusebene, und dem Probenträger bzw. dem Deckglas angeordnet. Zudem befinden sich bei der in der US 4,412,723 vorgeschlagenen Lösung Probe, Korrekturlinse und Probenträger in dem Medium Luft. Bei der Mikroskopie an Proben kleinster Größe, wie beispielsweise einzelnen Zellen, insbesondere aber bei der Analyse mikroskopischer Proben mit hohem Durchsatz ist die Verwendung einer solchen einzelner Korrekturlinse, wie sie in der US 4,412,723 vorgeschlagen wird, daher ausgeschlossen.

Aufgabe der Erfindung ist daher, ein Übertragungssystem zu entwickeln, welches einerseits die Verwendung bereits vorhandener Standard-Mikroskopobjektive erlaubt und dabei gleichzeitig die Anzahl der optischen Elemente in dem Übertragungssystem so gering wie möglich zu halten und somit einen einfachen Aufbau zu realisieren, wobei Aberrationen, die durch die schiefe Lage der Fokusebene bzw. Objektebene relativ zu einem Probenträger bzw. dem Deckglas eines Probengefäßes, wodurch das Licht somit schief hindurchtritt, korrigiert werden sollen. Andererseits soll auch die Mikroskopie an kleinsten Proben ermöglicht werden, so dass das Übertragungssystem auch geeignet sein soll, bei der Analyse von Proben mit hohem Durchsatz verwendet zu werden.

Diese Aufgabe wird durch ein Mikroskop gemäß Anspruch 1 gelöst. Das optische Übertragungssystem ist relativ zum ausgewählten Bereich der Probe so positioniert, dass sich der Bereich der Probe innerhalb der Brennweite der probennächsten Linse des optischen Übertragungssystems befindet, und sich die Zwischenbildebene und die Objektebene auf derselben Seite des optischen Übertragungssystems befinden. Das Übertragungssystem ist also im Mikroskop so integriert bzw. angeordnet, dass sich bei der mikroskopischen Analyse die Probe innerhalb der Brennweite befindet. Bei dem Zwischenbild handelt es sich um ein virtuelles Bild, wie durch die Tatsache, dass sich die Zwischenbildebene auf derselben Seite wie die Objektebene befindet, impliziert wird.

Im Unterschied zu den bisher bekannten Übertragungssystemen, bei denen ein reales, zugängliches Bild erzeugt wird, entsteht bei der Verwendung des erfindungsgemäßen optischen Übertragungssystems ein virtuelles, nicht zugängliches Bild. Das optische Übertragungssystem wird daher im folgenden schlagwortartig auch als *virtuelles Relay* bezeichnet. Auch hier kann optional nicht nur die Objektebene maßstabsgetreu abgebildet werden, sondern, wie auch bei der in der deutschen Anmeldung Nr. 10 2013 105 586.9 beschriebenen Anordnung, ein Volumenbereich einer gewissen Größe.

Das zweite Medium, in welchem sich die Zwischenbildebene befindet, kann beispielsweise Luft sein. Dann kann das virtuelle Volumenbild mit beliebigen, für das zweite Medium korrigierten Objektiven, insbesondere also auch mit Trockenobjektiven, betrachtet werden. Für das Detektionsobjektiv erscheint das virtuelle Bild - bei einer objekttreuen Abbildung - als Volumen-Objekt, und die Fokussierung auf bestimmte Ebenen eines solchen Volumen-Objekts findet wie gewöhnlich durch Änderung des Arbeitsabstandes des Mikroskopobjektivs oder durch innere Fokussierung desselben statt.

Dabei werden die sphärischen Aberrationen, die durch die planparallele Platte des Probenträgers bzw. des Deckglases des Probengefäßes verursacht werden, wenn die gewünschte Fokusebene mit den Normalen der Großflächen dieser Platte einen von Null verschiedenen Winkel einschließt, gleichzeitig durch das *virtuelle Relay* korrigiert. Auch höhere sphärische Aberrationen können mit diesem optischen Übertragungssystem korrigiert werden, sofern es entsprechend ausgelegt wird.

Ein großer Vorteil bei der Erzeugung eines virtuellen Zwischenbildes mit dem vorgeschlagenen optischen Übertragungssystem liegt darin, dass dazu überraschenderweise nur wenige Linsen verwendet werden müssen. Ein optimales Ergebnis hinsichtlich der Anzahl der Linsen einerseits und der Güte der Korrekturen andererseits erreicht man bereits mit zwei rotationssymmetrischen Linsen. Die Flächen dieser Linsen können alle sphärisch sein, bevorzugt ist jedoch mindestens eine der Linsen mit einer asphärisch geformten Fläche versehen, was es insbesondere ermöglicht, die Korrekturen in einem weiten Winkelbereich von nahezu 90° zur Normalen der Großflächen der planparallelen Platte mit ausreichender Güte ermöglicht. Optimale Ergebnisse erreicht man jedoch, wenn man den korrigierten Bereich auf einen Öffnungswinkel von etwa 82° beschränkt. Bei der Verwendung von Immersionsmedien lassen sich auf diese Weise hohe numerische Aperturen realisieren, beispielsweise NA = 1,32 für Wasser oder physiologische Kochsalzlösungen und NA = 1,52 für Öl. Bei der Verwendung im Mikroskop wird das optische Übertragungssystem dabei so positioniert, dass seine optische Achse zu den beiden Normalen der Großflächen der planparallelen Platte parallel liegt.

In einer bevorzugten Ausgestaltung ist das optische Übertragungssystem so ausgestaltet, dass es den Bereich der Probe mit einer Vergrößerung $M = n_1/n_2 \cdot \xi$ abbildend ausgestaltet ist. $n_1$ ist dabei der Brechungsindex des ersten Mediums und $n_2$ der Brechungsindex des zweiten Mediums. Das erste Medium ist dabei das Medium, in welchem sich die Probe befindet, also beispielsweise Wasser oder eine Nährlösung, z.B. eine physiologische Kochsalzlösung. Auch die Verwendung von Luft als erstem Medium ist prinzipiell möglich. Das zweite Medium ist im Prinzip ebenfalls frei wählbar und kann bei der Auslegung eines konkreten *virtuellen Relays* berücksichtigt werden. Vorteilhaft ist es jedoch, als zweites Medium Luft zu verwenden, da dann Standard-Mikroskopobjektive für die Beobachtung in Luft, sogenannte Trockenobjektive, verwendet werden können. Dies bringt erhebliche Kostenvorteile mit sich, da dann bereits bestehende Mikroskope relativ preisgünstig nachgerüstet werden können, was in der Regel ohne weiteres möglich ist, da das *virtuelle Relay* sehr kompakt gebaut ist und nach Art eines Adapters in den Mikroskopaufbau ohne weiteres integriert werden kann.

Die Vergrößerung kann dabei durch den Parameter $\xi$ weiter variiert werden. Dabei handelt es sich um einen im Prinzip frei wählbaren Faktor, der beim optischen Design, der Konstruktion des *virtuellen Relays* berücksichtigt wird. Bevorzugt liegt der Faktor in einem Bereich zwischen 0,5 und 2, davon abweichende Werte sind allerdings ebenfalls möglich. Besonders vorteilhaft ist jedoch $\xi = 1$, da dann die sogenannte Sinusbedingung - die Bedingung für eine komafreie Abbildung der Objektebene in die Zwischenbildebene - und die sogenannte Herschelbedingung - die Bedingung für eine öffnungsfreie Abbildung in der Tiefe - gleichzeitig erfüllt sind, so dass die laterale Vergrößerung und die Vergrößerung in der Tiefe gleich sind und die Abbildung in kleinen Volumenbereichen auf der Achse koma- und öffnungsfehlerfrei ist.

Da das vom *virtuellen Relay* erzeugte Zwischenbild innerhalb eines gewissen Volumens alle Eigenschaften des Volumen-Objekts innerhalb der korrigierten numerischen Apertur des optischen Übertragungssystems darstellt - wenn $\xi = 1$ ist, auch unverzerrt, so kann das Volumen-Bild im Prinzip unter beliebigen Winkeln mit einem Mikroskopobjektiv betrachtet werden, solange die numerische Apertur des Mikroskopobjektivs kleiner oder gleich der (korrigierten) numerischen Apertur des optischen Übertragungssystems ist, wobei diese durch die Wahl eines Immersionsmediums zwischen planparalleler Platte und Frontlinse des Übertragungssystems abhängt; auch zwischen den Linsen des Übertragungssystems kann sich ein Immersionsmedium befinden. Aus diesem Grund ist es vorteilhaft, einen möglichst großen Öffnungswinkel von mehr als 75° bzw. eine möglichst hohe numerische Apertur für das optische Übertragungssystem zu wählen, beispielsweise einen Wert von NA = 1,32 mit dem Immersionsmedium Wasser, entsprechend einem Öffnungswinkel von etwa 83°.

Das optische Übertragungssystem lässt sich im Prinzip mit beliebigen Mikroskopaufbauten verwenden und sein Einsatz ist überall dort sinnvoll, wo aufgrund der Analysemethode oder des Aufbaus die Fokusebene des jeweiligen Mikroskopobjektivs, d.h. die Objektebene, nicht parallel zu den Grenzflächen der planparallelen Platte als Teil eines Probenträgers oder Probengefäßes liegt.

Die Probe ist dabei in einem ersten Medium in einer Objektebene auf einem oder in einem mindestens teilweise als planparallele Platte ausgebildeten Probenträger angeordnet. Handelt es sich beispielsweise um ein Probengefäß mit seitlichen Wänden, welches mit Flüssigkeit gefüllt werden kann, so kann die planparallele Platte auch durch einen Deckel des Probengefäßes gebildet werden. Die Objektebene liegt schräg zu dieser planparallelen Platte, was bedeutet, dass das Licht - bezogen auf die optische Achse des Mikroskopobjektivs, welche senkrecht zur Objektebene steht - schräg durch diese planparallele Platte hindurchtritt. Das vorangehend beschriebene optische Übertragungssystem ist dann Teil des Mikroskops, welches außerdem mindestens ein Mikroskopobjektiv als Teil eines mikroskopischen Abbildungs- und / oder Beleuchtungssystems umfasst. Je nach Zweck ist das Mikroskopobjektiv für eine Abbildung aus der Zwischenbildebene im zweiten Medium in eine Bildebene, die beispielsweise durch den Flächendetektor einer Kamera gebildet werden kann, als Detektionsobjektiv ausgelegt, oder als Beleuchtungsobjektiv, wenn beispielsweise Beleuchtungslicht in Form eines Lichtblatts in die Zwischenbildebene und von dort durch das Übertragungssystem in die Objektebene abgebildet wird. Die optische Achse des mindestens einen Mikroskopobjektivs steht senkrecht auf der Zwischenbildebene, auf welche das mindestens eine Mikroskopobjektiv fokussiert ist. Der Probenbereich, aus welchem abgebildet werden soll, befindet sich dabei innerhalb der Brennweite der probennächsten Linse des optischen Übertragungssystems, und das Zwischenbild ist ein virtuelles Bild, wobei sich die Zwischenbildebene und die Objektebene auf derselben Seite des optischen Übertragungssystems befinden.

Dabei ist es zweckmäßig, wenn die numerische Apertur $NA_M$ des mindestens einen Mikroskopobjektivs nicht größer als die numerische Apertur $NA_O$ des optischen Übertragungssystems ist, da dann in einem maximalen Winkelbereich um die Normale der planparallelen Platte bzw. der optischen Achse des optischen Übertragungssystems eine korrigierte Abbildung erfolgen kann. Die numerische Apertur $N_M$ des Mikroskopobjektivs kann dabei auch unsymmetrisch sein um beispielsweise einer zur optischen Achse des Übertragungssystems gekippten Stellung Rechnung zu tragen: In meridionaler Richtung, d.h. in der Richtung der Verkippung, kann die numerische Apertur kleiner als in sagittaler Richtung, d.h. senkrecht zur Richtung der Verkippung. gewählt werden um einerseits einen möglichst hohen Verkippungswinkel realisieren zu können und andererseits einen möglichst hohen Öffnungswinkel zu verwirklichen.

In einer bevorzugten Ausgestaltung ist dabei der Bereich zwischen der probennächsten Linse des optischen Übertragungssystems und der planparallelen Platte von einem dritten Medium ausgefüllt, welches als Immersionsmedium für das optische Übertragungssystem dient. Dieses dritte Medium weist bevorzugt ähnliche oder identische optische Brechungseigenschaften wie das erste Medium auf, beide Medien können auch identisch sein, beispielsweise Wasser. Dabei sollte darauf geachtet werden, dass die Brechzahl des dritten Mediums nicht kleiner als die des ersten Mediums ist um das Auftreten von Totalreflexion zu vermeiden, was den zugänglichen Winkelbereich stark einschränken würde. Die Verwendung eines Immersionsmediums ermöglicht eine noch kompaktere Gestaltung des optischen Übertragungssystems und größere Öffnungswinkel bzw. höhere numerische Aperturen, wobei es vorteilhaft ist, ein drittes Medium zu verwenden, dessen Brechungsindex auch ähnlich dem des Materials der planparallelen Platte ist um den verwendbaren Winkelbereich zu maximieren. Grundsätzlich ist aber auch hier die Wahl des dritten Mediums prinzipiell frei, auch Luft oder ein anderes Gas kann das dritte Medium bilden. Bei der Verwendung von Luft als drittem Medium ist der Öffnungswinkel in der Regel kleiner, da aufgrund der geringeren Brechzahl von Luft gegenüber der von üblichen Immersionsmedien ansonsten bei größeren Einfallswinkeln, d.h. bei größeren Öffnungswinkeln, Totalreflexion auftritt.

Die Verwendung von Wasser als drittes Medium erfordert, dass das optische Übertragungssystem mit dem Probenträger im Bereich der planparallelen Platte so dicht verbunden ist, dass kein Wasser aus dem Bereich zwischen Probenträger und der Frontlinse des *virtuellen Relays* austreten kann. Die Anbringung des *virtuellen Relays* im Mikroskop kann dadurch technisch aufwendig werden. Vorteilhaft verwendet man daher als drittes Medium ein festes oder amorphes Medium, beispielsweise ein amorphes Fluoropolymer, wie es von der Firma BELLEX Int. Corp. unter dem Produktnamen CYTOP® angeboten wird. Aufgrund seiner Konsistenz muss dieses Material nicht gesondert in einem Gefäß aufbewahrt werden, was für die Ankopplung des optischen Übertragungssystems einen großen Vorteil darstellt. Auch Glycerin und Glycerinverbindungen lassen sich als erstes - und drittes - Medium einsetzen. Mit diesen und anderen, ebenfalls geeigneten sogenannten *Clearing*-Flüssigkeiten lassen sich zu untersuchende Proben teilweise transparent machen, was bei der Analyse von Vorteil ist.

In einer besonders zweckmäßigen Ausgestaltung umfasst das Mikroskop eine Halterung zur Aufnahme des optischen Übertragungssystems und zu seiner Fixierung relativ zu einem Stativ, zu einem Probentisch und / oder dem Probenträger. Das Mikroskopobjektiv weist dann zweckmäßig zur Fokussierung bevorzugt Mittel zur innenfokussierung auf und / oder ist entlang seiner optischen Achse relativ zum optischen Übertragungssystem verschiebbar.

Das optische Übertragungssystem wird also in einer fest vorgegebenen Position im Mikroskop angeordnet, so dass sein Abstand zum Probenträger immer gleich ist. Die Halterung ist dabei so konzipiert, dass das *virtuelle Relay* leicht ausgewechselt werden kann, da ein jedes *virtuelle Relay* speziell an das Material der planparallelen Platte angepasst ist, aber auch an das verwendete erste, zweite und insbesondere das dritte Medium. Als Material für die planparallele Platte kommen beispielsweise Glas oder Plastik in Frage, übliche Dicken liegen zwischen 0,17 mm und 0,5 mm. Da das optische Übertragungssystem sehr kompakt gebaut werden kann und mit maximal zwei Linsen auskommen kann, ist es auch möglich, die Halterung nach Art einer Revolvertrommel zu konzipieren, mit Aufnahmen für mehrere optische Übertragungssysteme, die dann je nach verwendetem Probenträger und / oder verwendeten Medien in den Strahlengang eingebracht werden können.

Wird als zweites Medium Luft verwendet, so ist das Mikroskopobjektiv vorzugsweise als Trockenobjektiv ausgestaltete, hier können dann bereits vorhandene Standardobjektive weiterverwendet werden.

In einer bevorzugten Ausgestaltung ist der Winkel, den die optische Achse des mindestens einen Mikroskopobjektivs mit der optischen Achse des optischen Übertragungssystems einschließt, frei einstellbar. Dies ermöglicht es dann auch, mehrere Objektive gleichzeitig zu verwenden, z.B. für die Beobachtung aus zwei Richtungen gleichzeitig und der Beleuchtung der Probe aus einer dritten Richtung, die beispielsweise zwischen diesen beiden Detektionsrichtungen liegen kann. Um eine Beobachtung der Probe aus verschiedenen Richtungen zu erleichtern, wenn jedoch nur ein Objektiv zur Beobachtung zur Verfügung steht, ist es vorteilhaft, Mittel vorzusehen, die es ermöglichen, dass das mindestens eine Mikroskopobjektiv in Bezug auf das optische Übertragungssystem relativ um dessen optischer Achse rotierbar ist, wenn die optische Achse des mindestens einen Mikroskopobjektivs mit der optischen Achse des optischen Übertragungssystems einen von Null verschiedenen Winkel einschließt. Da das *virtuelle Relay* rotationssymmetrisch aufgebaut ist, kann die Probe aus beliebigen Richtungen und Winkeln betrachtet werden, wobei immer die sphärischen Aberrationen, die durch den schrägen Lichtdurchtritt entstehen, korrigiert sind. Die Rotation des Mikroskopobjektivs relativ um die optische Achse des Übertragungssystems kann dabei so erfolgen, dass das Mikroskopobjektiv um die optische Achse des *virtuellen Relays* rotierbar ist, beispielsweise durch entsprechende Umlaufvorrichtungen am Mikroskopkörper, die bevorzugt ansteuerbar sind und automatisch bewegt werden können. Dabei kann optional auch der eingestellte Winkel des Mikroskopobjektivs zur optischen Achse variiert werden. Alternativ ist auch eine Drehung der Probe denkbar, jedoch gestaltet sich diese meistens aufwendiger, da sie hier auch mit einer lateralen Bewegung gekoppelt wäre.

In einer besonders bevorzugten Ausgestaltung ist das Mikroskop als Lichtblatt-Mikroskop ausgestaltet. Es umfasst dann ein erstes als Beleuchtungsobjektiv ausgestaltetes Mikroskopobjektiv zur Beleuchtung der Probe mit einem Lichtblatt und ein zweites, als Detektionsobjektiv ausgestaltetes Mikroskopobjektiv zur Detektion von Licht, welches aus dem Bereich der Probe abgestrahlt wird. Die optischen Achsen des Beleuchtungsobjektivs und des Detektionsobjektivs schließen dabei einen von Null verschiedenen Winkel, bevorzugt 90° ein. Die Verwendung des optischen Übertragungssystems bietet insbesondere bei der Lichtblattmikroskopie große Vorteile, da der Aufbau des Mikroskops durch diese Anordnung noch kompakter gestaltet werden kann und die vorteilhafte Anordnung der Objektive in einem Winkel von jeweils 45° zur Normalen der planparallelen Platte beibehalten werden kann. Auch andere Winkel sind selbstverständlich möglich und insbesondere bei verschiedenen numerischen Aperturen der Objektive vorteilhaft - dann kann das Objektiv mit der kleineren numerischen Apertur in einem größeren Winkel zur Normalen der planparallelen Platte angeordnet werden. Der von den optischen Hauptachsen beider Objektive eingeschlossene Winkel sollte dabei etwa 90° betragen. Zweckmäßig liegen dabei die optische Achse des Beleuchtungsobjektivs, des optischen Übertragungssystems und des Detektionsobjektivs in einer Ebene, dies ist aber nicht zwingend, eine Beobachtung ist auch mit anderen Winkeln möglich. Um hier Aufnahmen aus verschiedenen Richtungen zu erhalten, die zu einem Gesamtbild zusammengesetzt werden können, sind dann vorzugsweise beide Objektive gleichzeitig um die optische Achse des *virtuellen Relays* rotierbar, wobei beide Objektive zueinander relativ jedoch in ihrer Position fixiert sind.

Alternativ kann auch die optische Achse des Detektionsobjektivs relativ zur optischen Achse des optischen Übertragungssystems fixiert sein, wobei nur das Beleuchtungsobjektiv in Bezug auf die optische Achse des Detektionsobjektivs relativ um dieses rotierbar ist. Diese Alternative kann beispielsweise dann sinnvoll sein, wenn die optische Achse des Detektionsobjektivs mit der optischen Achse des optischen Übertragungssystems zusammenfällt.

Für die Erzeugung von sogenannten *Multi-View*-Aufnahmen, bei der die Probe wechselnd aus verschiedenen Richtungen beleuchtet und in verschiednen Richtungen detektiert wird, ist es vorteilhaft, wenn die optische Achse des Beleuchtungsobjektivs mit der optischen Achse des optischen Übertragungssystems eine erste Ebene aufspannt und die optische Achse des Detektionsobjektivs mit der optischen Achse des Übertragungssystems eine zweite Ebene aufspannt, welche die erste Ebene unter einem vorgegebenen Winkel schneidet. Der Winkel kann beispielsweise 120° betragen, so dass ohne weiteres ein drittes Mikroskopobjektiv hinzugenommen werden kann, welches dann zu den beiden benachbarten Objektiven ebenfalls im Winkel von 120° angeordnet ist, so dass die drei Mikroskopobjektive ein Dreibein bilden. Die optischen Achsen der drei Mikroskopobjektive stehen dann bevorzugt paarweise senkrecht zueinander, und das Mikroskop ist mit einer Ansteuerung versehen, die es ermöglicht jedes der drei Mikroskopobjektive entweder als Beleuchtungs- oder als Detektionsobjektiv zu betreiben, was durch geringfügige konstruktive Änderungen erreicht werden kann, insbesondere wenn ein quasi-statisches Lichtblatt verwendet wird, wofür keine im Strahlengang angeordnete Zylinderlinsen etc. verwendet werden müssen. Im Wechsel werden dann jeweils ein Objektiv als Beleuchtungsobjektiv und die beiden anderen Mikroskopobjektive als Detektionsobjektive betrieben. Die Ansteuerung lässt sich selbstverständlich auch für ein System mit nur zwei Mikroskopobjektiven verwenden. Vorteilhaft sind dabei alle Objektive, zwischen denen gewechselt wird, gleichartig ausgestaltet um jeweils vergleichbare Beleuchtungs- und Abbildungsbedingungen zu erhalten.

In einer weiteren vorteilhaften Ausgestaltung umfasst das Mikroskop einen Objektivrevolver, an welchem das Beleuchtungs- und das Detektionsobjektiv angeordnet - beispielsweise eingeschraubt - sind und an welchem ein weiteres Mikroskopobjektiv angeordnet ist, wobei in einer ersten Stellung des Objektivrevolvers, bei welcher Beleuchtungs- und Detektionsobjektiv in den Strahlengang eingeschwenkt sind, das Mikroskop als Lichtblatt-Mikroskop betreibbar ist, und in einer zweiten Stellung, bei der nur das weitere Mikroskopobjektiv in den Strahlengang eingeschwenkt ist, in einer weiteren Betriebsart betreibbar ist. Auf diese Weise wird eine Kombination verschiedener Betriebsarten und Beobachtungsarten ermöglicht.

Beispielsweise kann die optische Achse des weiteren Mikroskopobjektivs mit der optischen Achse des optischen Übertragungssystems zusammenfallen, wenn das weitere Mikroskopobjektiv in den Strahlengang eingeschwenkt ist. Wenn das weitere Mikroskopobjektiv dann beispielsweise als Weitfeld-Objektiv ausgestaltete ist mit einer geringen Vergrößerung - vorzugsweise um den Faktor 10x - im Bereich bis zu 20 ausgestaltet ist, kann dieses weitere Mikroskopobjektiv verwendet werden, um beispielsweise ein Übersichtsbild eines größeren Bereichs zur Orientierung und Festlegung des zu analysierenden Probenbereichs aufzunehmen. Alternativ kann das weitere Mikroskopobjektiv auch als Objektiv mit einem hohen Öffnungswinkel von mehr als 60° und einer entsprechend hohen numerischen Apertur ausgestaltet sein, beispielsweise 1,2 für das Immersionsmedium Wasser. Mit einem solchen Objektiv kann dann ein Bild in einem Laser-Scanning-Modus aufgenommen werden. Auch andere Objektive für die Verwendung mit dem Verfahren der SD- (*Spinning Disk*), der TIRF-(*Total Internal Reflection Fluorescence*) oder der SIM-Mikroskopie (*Structured Illumination Microscopy*) sind an dieser Stelle einsetzbar. Das weitere Mikroskopobjektiv kann auch einen von Null verschiedenen Winkel mit der optischen Achse des *virtuellen Relays* einschließen. Da die Korrektur der Aberrationen des schiefen Durchgangs ausschließlich im *virtuellen Relay* stattfindet, müssen dementsprechend keine weiteren Korrekturmechanismen in den Objektiv vorgesehen werden. Dies führt zu erheblichen Kosteneinsparungen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig.1    den grundlegenden Aufbau eines optischen Übertragungssystems
Fig.2    die Abbildungsverhältnisse bei einem solchen Übertragungssystem,
Fig.3    ein Übertragungssystem im Zusammenspiel mit einem Mikroskopobjektiv,
Fig.4    ein Übertragungssystem in einem Lichtblattmikroskop, und
Fig.5    ein Ausführungsbeispiel für ein optisches Übertragungssystem.

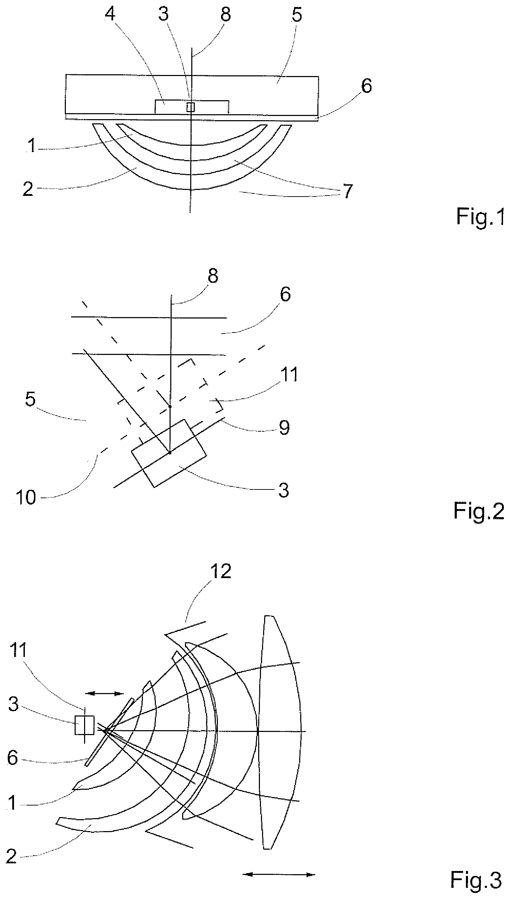

In Fig.1 ist zunächst der grundlegende Aufbau eines optischen Übertragungssystems gezeigt. Das optische Übertragungssystem umfasst mindestens eine Linse, im gezeigten Beispiel werden zwei Linsen, eine als Frontlinse ausgestaltete erste Linse 1 und eine zweite Linse 2 verwendet. Das optische Übertragungssystem bildet einen ausgewählten Bereich 3 einer Probe 4, welche in einem ersten Medium 5 in einer Objektebene auf oder in einem mindestens teilweise als planparallele Platte 6 ausgebildeten Probenträger angeordnet ist, aus der Objektebene in ein Zwischenbild in einer Zwischenbildebene in einem zweiten Medium 7 ab. Bei der Abbildung befindet sich die planparallele Platte 6 zwischen dem optischen Übertragungssystem und dem Bereich 3 der Probe 4. Objektebene und Zwischenbildebene schließen mit einer optischen Achse 8 des Übertragungssystems einen Winkel zwischen Null und 90° ein. Dabei ist das optische Übertragungssystem relativ zum Bereich 3 der Probe 4 so positioniert, dass sich dieser Bereich 3 der Probe 4 innerhalb der Brennweite der probennächsten Linse 1 des optischen Übertragungssystems befindet. Bei dem Zwischenbild handelt es sich um ein virtuelles Bild, wobei sich die Zwischenbildebene und die Objektebene auf derselben Seite des optischen Übertragungssystems befinden. Die Linsen 1 und 2 sind beide rotationssymmetrisch, mindestens eine der beiden Linsen 1 und 2 ist mit einer asphärisch geformten Fläche versehen. Als erstes Medium 5 kann beispielsweise Wasser, als zweites Medium Luft verwendet werden. Vorteilhaft für eine hohe numerische Apertur, aber nicht zwingend, füllt das erste Medium 5 auch den Bereich zwischen der planparallelen Platte 6 und der Frontlinse 1 des optischen Übertragungssystems auf, alternativ kann auch ein drittes Medium verwendet werden.

Das Abbildungsverhalten des optischen Übertragungssystems, welches schlagwortartig auch als *virtuelles Relay* bezeichnet wird, ist in Fig.2 näher dargestellt. Hier ist der Bereich 3 der Probe 4 vergrößert dargestellt. In diesem Bereich ist eine Objektebene 9 definiert. Die Objektebene 9 schließt mit der optischen Achse 8 des optischen Übertragungssystems einen von 90° verschiedenen Winkel ein. Die zur Objektebene 9 senkrecht gezeigte Richtung entspricht dann beispielsweise der Richtung, aus der ein Beobachtungsobjektiv, ein Mikroskopobjektiv auf die Probe gerichtet ist. Diese Objektebene 9 wird dann auf eine Zwischenbildebene 10 abgebildet, die sich ebenfalls in dem Bereich befindet, wo die Probe 4 angeordnet ist, es handelt sich bei dem entstehenden Zwischenbild also um ein virtuelles Bild. Das Zwischenbild ist gegenüber dem originalen Objekt vergrößert, hier durch den vergrößert dargestellten Volumenbildbereich 11 gekennzeichnet. Die Vergrößerung des optischen Übertragungssystems ist dabei so eingestellt, dass sie dem Verhältnis der Brechzahl des ersten Mediums zu der des zweiten Mediums, multipliziert mit einem Faktor $\xi$, welcher frei wählbar ist, entspricht. Ist $\xi$ ungleich 1, so wird das Bild entweder lateral oder in der Tiefe verzerrt, also im Volumen nicht maßstabsgetreu abgebildet. Im vorliegenden Fall ist jedoch $\xi$ gleich 1, so dass die Abbildung objekttreu erfolgt, d.h. der Bereich 3 der Probe wird maßstabsgetreu vergrößert in den Volumenbereich 11 abgebildet, und zwar über den ganzen Volumenbereich 11. Die Vergrößerung beträgt hier M = 1,33, wenn das erste Medium Wasser und das zweite Medium Luft ist. Ist $\xi$ ungleich 1, so wird nur die Objektebene maßstabsgetreu in die Zwischenbildebene abgebildet, da dann entweder die sogenannte Sinusbedingung oder die sogenannte Herschelbedingung nicht mehr erfüllt sind. Die numerische Apertur des optischen Übertragungssystems sollte so groß wie möglich gewählt werden, sie kann beispielsweise bei Verwendung des Immersionsmediums Wasser als drittem Medium zwischen planparalleler Platte 6 und Frontlinse des Übertragungssystems 1,32 betragen, entsprechend einem Öffnungswinkel von etwa 83°. Der Öffnungswinkel sollte bevorzugt mindestens 75° betragen.

Bei einer objekttreuen Abbildung kann ein Mikroskopobjektiv ohne weitere Korrekturen auf jede Zwischenbildebene 10 fokussiert werden, die in dem objekttreu abgebildeten Volumenbereich 11 liegt.

Dies ist beispielhaft in Fig.3 dargestellt. Hier ist auf der der planparallelen Platte 6 abgewandten Seite des optischen Übertragungssystems ein Mikroskopobjektiv 12 mit seinen ersten beiden Linsen angedeutet. Die Fokussierung des Mikroskopobjektivs auf seine Objektebene erfolgt hier mit einer Verschiebung des Objektivs entlang seiner optischen Achse, hier etwa in einem Bereich von 67 $\mu$m in beiden Richtungen von einer Ruheposition aus. Durch diese Bewegung lässt sich die Objektebene des Mikroskopobjektivs 12, die der Zwischenbildebene 10 entspricht, die bei einer objekttreuen Abbildung überall im Volumenbildbereich 11 angeordnet sein kann, um etwa 50 $\mu$m in beiden Richtungen.

Da das *virtuelle Relay* in das zweite Medium 7 abbildet, entsteht das virtuelle Zwischenbild ebenfalls in diesem Medium, also beispielsweise in Luft. Unter diesen Umständen können auf Mikroskopseite weiterhin schon vorhandene Trockenobjektive verwendet werden. Das optische Übertragungssystem wird vorzugsweise in einer nicht gezeigten Halterung zur Aufnahme desselben gehalten, so dass es relativ zu einem Stativ des Mikroskops, einem Probentisch und/ oder der Probenträger mit der planparallelen Platte 6 fixiert ist. Das Mikroskopobjektiv wird zur Fokussierung entweder entlang seiner optischen Achse relativ zum optischen Übertragungssystem verschoben oder auch über Mittel zur Innenfokussierung. Der Winkel, den die optische Achse des mindestens einen Mikroskopobjektivs 12 mit der optischen Achse 8 des optischen Übertragungssystems einschließt, ist bevorzugt frei wählbar, d.h. dass das Objektiv des Mikroskops relativ zur Probe in einem großen Winkelbereich einstellbar ist, wobei diese Einstellung sowohl am Mikroskop selber als auch an der Halterung der Probe und an der Probe selbst vorgenommen werden kann. Auch kann die optische Achse des mindestens einen Mikroskopobjektivs 12 mit der optischen Achse 8 des optischen Übertragungssystems einen von Null verschiedenen Winkel einschließen und in Bezug auf das optische Übertragungssystem und dessen optische Achse 8 rotierbar sein.

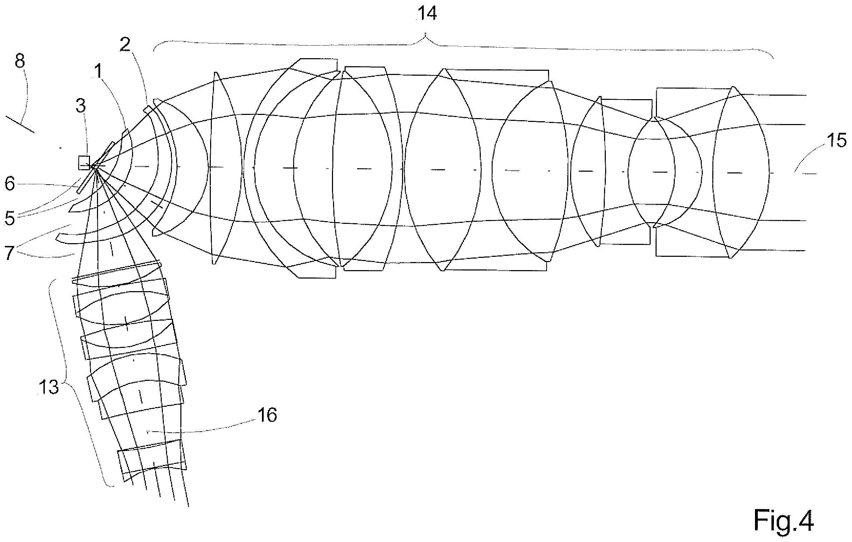

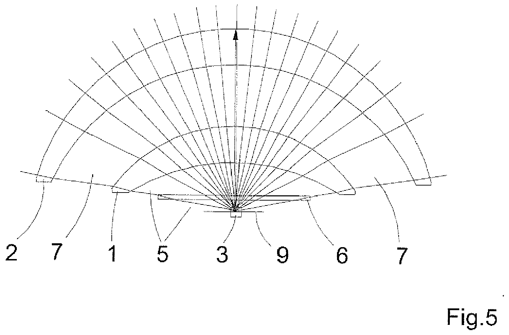

Insbesondere kann ein Mikroskop, welches das vorangehend beschriebene optische Übertragungssystem verwendet auch als Lichtblatt-Mikroskop ausgestaltet sein. Dies ist beispielhaft in Fig.4 dargestellt. Ein erstes Mikroskopobjektiv ist als Beleuchtungsobjektiv 13 ausgestaltet, das Beleuchtungsobjektiv 13 beleuchtet die Probe 4 mit einem Lichtblatt. Ein zweites Mikroskopobjektiv ist als Detektionsobjektiv 14 ausgestaltet, es detektiert Licht, welches aus dem Bereich 3 der Probe 4 abgestrahlt wird. Die optischen Achsen des Beleuchtungsobjektivs und des Detektionsobjektivs schließen einen Winkel von 90° ein, der Winkel der optischen Achse 15 des Detektionsobjektivs 14 zur optischen Achse 8 des optischen Übertragungssystems beträgt hier 32° und der Winkel der optischen Achse 16 des Beleuchtungsobjektivs 13 entsprechend 58°. Bei dem Übertragungssystem handelt es sich bei dem in Fig.3 gezeigte und in Fig. 5 noch genauer dargestellte System, das virtuelle Bild in Luft als zweitem Medium 7 wirkt gegenüber dem Objekt um einen Faktor von 1,33 vergrößert. Als drittes Medium wird wie als erstes Medium Wasser bzw. eine physiologische Kochsalzlösung verwendet, auch Glycerin oder andere *Clearing*-Flüssigkeiten können vorzugsweise eingesetzt werden. Die numerische Apertur des optischen Übertragungssystems beträgt 1,32, diejenige des Detektionsobjektivs 14 liegt bei 1. Das Beleuchtungsobjektiv 13 hat eine noch kleinere Apertur, beispielsweise im Bereich von 0,3±0,2. Beleuchtungsobjektiv 13 und Detektionsobjektiv 14 sind hier für spezielle Zwecke im Rahmen der Lichtblattmikroskopie ausgelegt, es sind jedoch auch andere Konfigurationen denkbar, bei denen beide Objektive gleich mit einer mittleren Apertur ausgestattet sind, so dass sie wechselweise für sogenannte Multi-View-Aufnahmen verwendet werden können, bei denen die Objektive abwechselnd als Beleuchtungs- und Detektionsobjektiv verwendet werden.

Das in Fig.5 gezeigte optische Übertragungssystem weist die in Tabelle 1 aufgeführten Daten auf:

Tabelle 1: Daten für das *virtuelle Relay* aus Fig. 5

| Nr. | Radius | Abstand | Medium | $n_d$ | $n_{C'}$ | $n_{F'}$ | $n_g$ |
|---|---|---|---|---|---|---|---|
| 1 | 0 | 0,5 | W23 | 1,3360 | 1,3329 | 1,3390 | 1,3417 |
| 2 | 0 | 0,17 | NK5 | 1,5246 | 1,5202 | 1,5291 | 1,5334 |
| 3 | 0 | 2,02 | W23 | 1,3360 | 1,3329 | 1,3390 | 1,3417 |
| 4 | -8,0522 | 1,50 | NK5 | 1,5246 | 1,5202 | 1,5291 | 1,5334 |
| 5 | -5,8050 | 2,52 | Luft | 1 | 1 | 1 | 1 |
| 6 | -8,2009 | 1,50 | NK5 | 1,5246 | 1,5202 | 1,5291 | 1,5334 |
| 7 | -8,3898 | 1 | Luft | 1 | 1 | 1 | 1 |

Als Material für die planparallele Platte 6 - Fläche Nr. 2 - wurde dabei Kronglas mit der Bezeichnung NK5 mit einer Dicke von 0,17 mm verwendet. Die Angaben von Radius und Dicke bzw. Abstand erfolgt in mm. Mit "W23" wird eine physiologische Kochsalzlösung (NaCl) bezeichnet. Der Abstand zwischen Probe und der äußersten Linsenfläche 7 des optischen

Übertragungssystems beträgt hier 7,54 mm. Die Brechzahl $n_d$ betrifft die Wellenlänge $\lambda_e$ = 546,07 nm, die Brechzahl $n_{C'}$ betrifft die Wellenlänge $\lambda_{C'}$ = 643,84 nm, die Brechzahl $n_{F'}$ betrifft die Wellenlänge $\lambda_{F'}$ = 479,99 nm und die Brechzahl $n_g$ betrifft die Wellenlänge $\lambda_e$ = 435,83 nm. "1" in Tabelle 1 bezeichnet den Ort der Probe, d.h. die Objektebene; diese ist vom Deckglas in 0,5 mm Entfernung angeordnet. Der Bereich zwischen der planparallelen Platte 6 und der ersten, probennächsten Fläche 4 der Frontlinse 1 ist mit dem dritten Medium aufgefüllt, hier ebenfalls mit der Kochsalzlösung W23. Drittes Medium und erstes Medium 5 sind in diesem Beispiel also identisch, das dritte Medium wirkt als Immersionsmedium für das *virtuelle Relay.* Im Scheitelpunkt beträgt der Abstand der Frontfläche Nr. 4 vom Probenträger somit 2,02 mm. Die Dicke der Frontlinse 1 aus Kronglas beträgt 1,50 mm, usw. Auch die zweite Linse ist aus Kronglas gefertigt. Zwischen beiden Linsen befindet sich als zweites Medium 7 Luft.

Der äußeren Fläche 5 der Frontlinse 1 ist außerdem eine asphärische Form aufgeprägt. Die asphärisch geformte Fläche, hier eine rotationssymmetrische Kegelschnittasphäre, wird dabei durch die Beziehung

$$f(h) = \frac{\rho h^2}{1 + \sqrt{1 - (1 + K) \cdot (\rho h)^2}} + \sum_{i=2}^{N} c_{2i} h^{2i}$$

beschrieben. $K$ ist die konische Konstante, $i$ und $N$ sind natürliche Zahlen. $c_{2i}$ bezeichnet die Koeffizienten eines Polynoms in $h$. Für $\rho$ gilt die Beziehung $\rho = 1/R$, und $R$ bezeichnet den Radius einer gedachten Kegelschnittfläche am Scheitelpunkt dieser Fläche, d.h. den Abstand des Scheitelpunkts zum nächstgelegenen Brennpunkt. Dabei liegen sowohl der Scheitelpunkt als auch die Brennpunkte der Kegelschnittfläche auf der optischen Achse. $h$ bezeichnet den Abstand zur optischen Achse, an der der Wert der Funktion $f(h)$ bestimmt wird, bei $f$ handelt es sich um den Abstand der Linsenoberfläche von einer lotrecht auf der optischen Achse im Scheitelpunkt der Kegelschnittfläche stehenden Ebene beim Abstand $h$ von der optischen Achse. Die Koeffizienten $c_{2i}$, die konische Konstante K und der Radius $R$ werden iterativ bestimmt. Im vorliegenden Beispiel beträgt der Wert der konischen Konstante $K = -0{,}1806$ und der Scheitelradius liegt bei $R = -5{,}8050$ mm. Wenn man eine übliche Linsenhöhe von ca. 30 mm ansetzt, ergeben sich die folgenden Koeffizienten des Polynoms in $h$ bis $i = 3$: $c_2 = 1{,}3909 \cdot 10^{-4}$, $c_4 = 3{,}2862 \cdot 10^{-7}$ und $c_6 = -1{,}5531 \cdot 10^{-9}$.

Die numerische Apertur $NA_M$ des Mikroskopobjektivs sollte dabei nicht größer als die numerische Apertur $NA_O$ des optischen Übertragungssystems sein, so dass mit dem Mikroskopobjektiv 12 der Volumenbildbereich 11 unter allen möglichen Winkeln betrachtet werden kann. Bei dem in Fig. 5 gezeigten Beispiel ist der Strahlenverlauf bis zu einem Öffnungswinkel von 82° korrigiert, wie durch die äußersten Strahlen angedeutet wird, ein Adapter würde dann nur in dem Bereich ansetzen, wo das optische Übertragungssystem nicht korrigiert.

Mit dem vorangehend beschriebenen optischen Übertragungssystem ist es gelungen, ein kompaktes Bauelement zur Korrektur sphärischer Aberrationen beim schiefen Lichtdurchtritt zu korrigieren, ohne das dazu vorhandene Objektive durch andere ersetzt werden müssten. Das *virtuelle Relay* kann somit bestehende Mikroskope, insbesondere solche, die die Lichtblattmikroskopie ausgelegt sind, jedoch sphärische Aberrationen nicht oder nicht ausreichend korrigieren, ergänzen.

**Bezugszeichenliste**

1 Linse
2 Linse
3 Bereich
4 Probe
5 erstes Medium
6 planparallele Platte
7 zweites Medium
8 optische Achse
9 Objektebene
10 Zwischenbildebene
11 Volumenbildebene
12 Mikroskopobjektiv
13 Beleuchtungsobjektiv
14 Detektionsobjektiv
15 optische Achse
16 optische Achse

**Patentansprüche**

1. Mikroskop zur Abbildung eines Bereichs (3) einer Probe (4), welche in einem ersten Medium (5) in einer Objektebene (9) auf oder in einem mindestens teilweise als planparallele Platte (6) ausgebildeten Probenträger angeordnet ist, umfassend

   - mindestens ein Mikroskopobjektiv (12) als Teil eines mikroskopischen Abbildungs- und / oder Beleuchtungssystems,

- ein zwischen Probenträger und Mikroskopobjektiv angeordnetes optisches Übertragungssystem mit zwei rotationssymmetrischen Linsen (1, 2), wobei sich der Bereich (3) der Probe (4) in der Objektebene (9) innerhalb der Brennweite einer Frontlinse (1) des optischen Übertragungssystems befindet und die planparallele Platte (6) zwischen Probe (4) und optischem Übertragungssystem angeordnet ist, so dass die Objektebene (9) in ein virtuelles, vergrößertes Zwischenbild in einer Zwischenbildebene (10) auf derselben Seite des optischen Übertragungssystems wie die Objektebene (9) abgebildet wird,

- wobei sich das virtuelle Zwischenbild in einem zweiten Medium (7) befindet,

- wobei die Objektebene (9) und die Zwischenbildebene (10) mit einer optischen Achse (8) des Übertragungssystems, welche zu den Normalen der Großflächen der planparallelen Platte (6) parallel liegt, einen Winkel von 0° bis weniger als 90° einschließen und die Frontlinse (1) und die zweite Linse (2) des optischen Übertragungssystems sphärische Aberrationen aufgrund von nichtparallelen Lagen der Objektebene (9) zur planparallelen Platte (6) korrigierend ausgebildet sind, und

- wobei das mindestens eine Mikroskopobjektiv (12) für eine Abbildung aus der oder in die Zwischenbildebene (10) im zweiten Medium (7) ausgelegt ist, wobei eine optische Achse des mindestens einen Mikroskopobjektivs (12) senkrecht auf der Zwischenbildebene (10) steht und das mindestens eine Mikroskopobjektiv (12) auf die Zwischenbildebene (10) fokussiert ist.

2. Mikroskop nach Anspruch 1, **dadurch gekennzeichnet, dass** die numerische Apertur $NA_M$ des mindestens einen Mikroskopobjektivs (12) nicht größer als die numerische Apertur $NAo$ des optischen Übertragungssystems ist.

3. Mikroskop nach Anspruch 1 oder 2, **dadurch gekennzeichnet, dass** der Bereich zwischen der Frontlinse (1) des optischen Übertragungssystems und der planparallelen Platte (6) von einem dritten Medium als Immersionsmedium für das optische Übertragungssystem ausgefüllt ist, welches bevorzugt ähnliche oder identische optische Brechungseigenschaften wie das erste Medium (5) aufweist.

4. Mikroskop nach Anspruch 3, **dadurch gekennzeichnet, dass** das erste Medium (5) und das dritte Medium Immersionsmedien, bevorzugt Wasser, Glycerin oder Öl sind, und dass das zweite Medium (7) Luft ist.

5. Mikroskop nach einem der Ansprüche 1 bis 4, **dadurch gekennzeichnet, dass** die Vergrößerung des optischen Übertragungssystems $M = n_1/n_2 \cdot \xi$ beträgt, wobei $n_1$ der Brechungsindex des ersten Mediums (5), $n_2$ der Brechungsindex des zweiten Mediums (7) und $\xi$ ein frei wählbarer Faktor ist, welcher bevorzugt zwischen 0,5 und 2, besonders bevorzugt bei 1 liegt.

6. Mikroskop nach einem der Ansprüche 1 bis 5, **dadurch gekennzeichnet, dass** das optische Übertragungssystem sphärische Aberrationen bis zu einem Öffnungswinkel von 83° Grad korrigierend ausgebildet ist.

7. Mikroskop nach einem der Ansprüche 1 bis 6, umfassend eine Halterung zur Aufnahme und Fixierung des optischen Übertragungssystems relativ zu einem Stativ, einem Probentisch und / oder dem Probenträger, wobei das Mikroskopobjektiv (12) zur Fokussierung bevorzugt Mittel zur Innenfokussierung aufweist und / oder entlang seiner optischen Achse relativ zum optischen Übertragungssystem verschiebbar ist.

8. Mikroskop nach Anspruch 7, **dadurch gekennzeichnet, dass** die Halterung als Revolvertrommel mit Aufnahmen für mehrere optische Übertagungssysteme ausgebildet ist.

9. Mikroskop nach einem der Ansprüche 1 bis 8, **dadurch gekennzeichnet, dass** das mindestens eine Mikroskopobjektiv als Trockenobjektiv ausgestaltet ist.

10. Mikroskop nach einem der Ansprüche 1 bis 9, **dadurch gekennzeichnet, dass** der Winkel, den die optische Achse des mindestens einen Mikroskopobjektivs (12) mit der optischen Achse (8) des optischen Übertragungssystems einschließt, frei einstellbar ist.

11. Mikroskop nach einem der Ansprüche 1 bis 10, **dadurch gekennzeichnet, dass** die optische Achse des mindestens einen Mikroskopobjektivs (12) mit der optischen Achse (8) des optischen Übertragungssystems einen von Null verschiedenen Winkel einschließt und das mindestens eine Mikroskopobjektiv (12) in Bezug auf das optische Übertragungssystem um dessen optische Achse (8) rotierbar ist.

12. Mikroskop nach einem der Ansprüche 1 bis 11, welches als Lichtblatt-Mikroskop ausgestaltet ist, mit einem ersten, als Beleuchtungsobjektiv (13) ausgestalteten Mikroskopobjektiv zur Beleuchtung der Probe (4) mit einem Lichtblatt, und einem zweiten, als Detektionsobjektiv (14) ausgestalteten Mikroskopobjektiv zur Detektion von Licht, welches aus dem Bereich (3) der Probe (4) abgestrahlt wird, wobei die optischen Achsen des Beleuchtungsobjektivs (13) und des Detektionsobjektivs (14) einen von Null verschiedenen Winkel, bevorzugt 90°, einschließen, wobei das optische Übertragungssystem zwischen Beleuchtungsobjektiv (13) und Detektionsobjektiv (14) einerseits und dem Probenträger andererseits angeordnet ist.

13. Mikroskop nach Anspruch 12, **dadurch gekennzeichnet, dass** die optischen Achsen des Beleuchtungsobjektivs (13), des optischen Übertragungssystems und des Detektionsobjektivs (14) in einer Ebene liegen.

14. Mikroskop nach einem Ansprüche 12 oder 13, sofern nicht rückbezogen auf Anspruch 12, **dadurch gekennzeichnet, dass** die optische Achse (15) des Detektionsobjektivs relativ zur optischen Achse (8) des optischen Übertragungssystems fixiert ist und das Beleuchtungsobjektiv (13) in Bezug auf die optische Achse des Detektionsobjektivs (14) relativ um dieses rotierbar ist.

15. Mikroskop nach einem Ansprüche 12 oder 14, **dadurch gekennzeichnet, dass** die optische Achse (16) des Beleuchtungsobjektivs (13) mit der optischen Achse (8) des optischen Übertragungssystems eine erste Ebene aufspannt, und die optische Achse (15) des Detektionsobjektivs (14) mit der optischen Achse (8) des Übertragungssystems eine zweite Ebene aufspannt, welche die erste Ebene unter einem vorgegebenen Winkel, bevorzugt 120° schneidet, umfassend ein drittes Mikroskopobjektiv, dessen optische Achse mit der optischen Achse (8) des Übertragungssystems eine dritte Ebene aufspannt, welche die erste und die zweite Ebene unter vorgegebenen Winkeln, bevorzugt ebenfalls 120°, schneidet, wobei die optischen Achsen des Beleuchtungsobjektivs (13), des Detektionsobjektivs (14) und des dritten Mikroskopobjektivs bevorzugt paarweise senkrecht aufeinander stehen, umfassend bevorzugt außerdem eine Ansteuerung, mit welcher das erste, zweite und dritte Mikroskopobjektiv wahlweise als Beleuchtungs- oder Detektionsobjektiv betreibbar sind.

16. Mikroskop nach einem Ansprüche 12 bis 15, umfassend einen Objektivrevolver, an welchem das Beleuchtungsobjektiv (13) und das Detektionsobjektiv (14) angeordnet sind, und an welchem ein weiteres Mikroskopobjektiv angeordnet ist, wobei in einer ersten Stellung des Objektivrevolvers, bei der das Beleuchtungsobjektiv (13) und das Detektionsobjektiv (14) in den Strahlengang eingeschwenkt sind, das Mikroskop als Lichtblatt-Mikroskop betreibbar ist, und in einer zweiten Stellung, bei der nur das weitere Mikroskopobjektiv in den Strahlengang eingeschwenkt ist, in einer weiteren Betriebsart betreibbar ist.

17. Mikroskop nach Anspruch 16, **dadurch gekennzeichnet, dass** die optische Achse des weiteren Mikroskopobjektivs im in den Strahlengang eingeschwenkter Position mit der optischen Achse des optischen Übertragungssystems zusammenfällt, und bevorzugt das weitere Mikroskopobjektiv als Weitfeld-Objektiv mit einer Vergrößerung im Bereich von bis zu 20 oder als Objektiv mit einem Öffnungswinkel von mehr als 60° ausgestaltet ist.

## Claims

1. Microscope for imaging a region (3) of a sample (4) arranged in a first medium (5) in an object plane (9) on or in a sample carrier, which is embodied at least partially in the form of a plane-parallel plate (6), comprising

    - at least one microscope objective (12) as part of a microscopic imaging and/or illumination system,
    - an optical transmission system, arranged between sample carrier and microscope objective and having two rotationally symmetric lenses (1, 2), wherein the region (3) of the sample (4) in the object plane (9) is located within the focal length of a front lens (1) of the optical transmission system and the plane-parallel plate (6) is arranged between sample (4) and optical transmission system, with the result that the object plane (9) is imaged into a virtual, magnified intermediate image in an intermediate image plane (10) on the same side of the optical transmission system as the object plane (9),
    - wherein the virtual intermediate image is located in a second medium (7),
    - wherein the object plane (9) and the intermediate image plane (10) enclose with an optical axis (8) of the transmission system, which is parallel with respect to the normal of the large surfaces of the plane-parallel plate (6), an angle of 0° to less than 90°, and the front lens (1) and the second lens (2) of the optical transmission system are embodied to correct spherical aberrations due to non-parallel orientations of the object plane (9) with respect to the plane-parallel plate (6), and
    - wherein the at least one microscope objective (12) is designed for imaging from or into the intermediate image plane (10) in the second medium (7), wherein an optical axis of the at least one microscope objective (12) is perpendicular to the intermediate image plane (10) and the at least one microscope objective (12) is focused to the intermediate image plane (10).

2. Microscope according to Claim 1, **characterized in that** the numerical aperture $NA_M$ of the at least one microscope objective (12) is not greater than the numerical aperture $NA_O$ of the optical transmission system.

3. Microscope according to Claim 1 or 2, **characterized in that** the region between the front lens (1) of the optical transmission system and the plane-parallel plate (6) is filled by a third medium as an immersion medium for the optical transmission system, which preferably exhibits similar or identical optical refractive properties to the first medium (5).

4. Microscope according to Claim 3, **characterized in that** the first medium (5) and the third medium are immersion media, preferably water, glycerol or oil, and **in that** the second medium (7) is air.

5. Microscope according to one of Claims 1 to 4, **characterized in that** the magnification of the optical transmission system $M = n_1/n_2 \cdot \xi$, wherein $n_1$ is the refractive index of the first medium (5), $n_2$ is the refractive index of the second medium (7), and $\xi$ is a freely selectable factor which is preferably between 0.5 and 2, with particular preference 1.

6. Microscope according to one of Claims 1 to 5, **characterized in that** the optical transmission system is embodied to correct spherical aberrations up to an aperture angle of 83°.

7. Microscope according to one of Claims 1 to 6, comprising a holder for receiving and fixing the optical transmission system relative to a stand, a sample stage and/or the sample carrier, wherein the microscope objective (12) for focusing purposes preferably has means for internal focusing and/or is displaceable, along the optical axis thereof, relative to the optical transmission system.

8. Microscope according to Claim 7, **characterized in that** the holder is embodied in the form of a revolver turret with receptacles for a plurality of optical transmission systems.

9. Microscope according to one of Claims 1 to 8, **characterized in that** the at least one microscope objective is configured as a dry objective.

10. Microscope according to one of Claims 1 to 9, **characterized in that** the angle enclosed by the optical axis of the at least one microscope objective (12) and the optical axis (8) of the optical transmission system is freely settable.

11. Microscope according to one of Claims 1 to 10, **characterized in that** the optical axis of the at least one microscope objective (12) encloses with the optical axis (8) of the optical transmission system an angle that deviates from zero and the at least one microscope objective (12) is rotatable relative to the optical transmission system about the optical axis (8) thereof.

12. Microscope according to one of Claims 1 to 11, which is configured as a light sheet microscope, having a first microscope objective, configured as an illumination objective (13), for illuminating the sample (4) with a light sheet, and a second microscope objective, configured as a detection objective (14), for detecting light emitted from the region (3) of the sample (4), wherein the optical axes of the illumination objective (13) and of the detection objective (14) enclose an angle that deviates from zero, preferably 90°, wherein the optical transmission system is arranged between illumination objective (13) and detection objective (14) on one side, and the sample carrier on the other side.

13. Microscope according to Claim 12, **characterized in that** the optical axes of the illumination objective (13), of the optical transmission system and of the detection objective (14) are located on one plane.

14. Microscope according to either of Claims 12 and 13, if not referring back to Claim 12, **characterized in that** the optical axis (15) of the detection objective is fixed relative to the optical axis (8) of the optical transmission system and the illumination objective (13) is rotatable relative to the optical axis of the detection objective (14) about the latter.

15. Microscope according to one of Claims 12 or 14, **characterized in that** the optical axis (16) of the illumination objective (13) defines a first plane with the optical axis (8) of the optical transmission system, and the optical axis (15) of the detection objective (14) defines a second plane with the optical axis (8) of the transmission system, with the second plane intersecting the first plane at a prescribed angle, preferably 120°, comprising a third microscope objective, the optical axis of which defines a third plane with the optical axis (8) of the transmission system, with the third plane intersecting the first and the second plane at prescribed angles, preferably likewise 120°, wherein the optical axes of the illumination objective (13), of the detection objective (14) and of the third microscope objective are preferably in pairs perpendicular to one another, comprising preferably in addition actuation with which the first, second and third microscope objectives are selectively operable as illumination or detection objective.

16. Microscope according to one of Claims 12 to 15, comprising an objective revolver, on which the illumination objective (13) and the detection objective (14) are arranged and on which a further microscope objective is arranged, wherein, in a first position of the object turret, in which the illumination objective (13) and the detection objective (14) have been inserted into the beam path, the microscope is operable as a light sheet microscope, and, in a second position, in which only the further microscope objective has been inserted into the beam path, it is operable in a further operating mode.

17. Microscope according to Claim 16, **characterized in that** the optical axis of the further microscope objective in the position in which it has been inserted into the beam path coincides with the optical axis of the optical transmission system, and preferably the further microscope objective is configured as a wide-field objective having a magnification in the range of up to 20 or as an objective having an aperture angle of more than 60°.

## Revendications

1. Microscope pour l'imagerie d'une zone (3) d'un échantillon (4), lequel est agencé dans un premier milieu (5) dans un plan d'objet (9) sur ou dans un porte-échantillon configuré au moins partiellement en forme de plaque à plans parallèles (6), comprenant

   - au moins un objectif de microscope (12) comme partie d'un système d'imagerie et/ou d'illumination microscopique,
   - un système de transmission optique agencé entre le porte-échantillon et l'objectif de microscope doté de deux lentilles à symétrie de rotation (1, 2), dans lequel la zone (3) d'un échantillon (4) dans le plan d'objet (9) se trouve à l'intérieur de la distance focale d'une lentille frontale (1) du système de transmission optique et la plaque à plans parallèles (6) est agencée entre l'échantillon (4) et le système de transmission optique, de sorte que le plan d'objet (9) est visualisé dans une image intermédiaire virtuelle agrandie dans un plan d'image intermédiaire (10) du même côté du système de transmission optique que le plan d'objet (9),
   - dans lequel l'image intermédiaire virtuelle se trouve dans un deuxième milieu (7),
   - dans lequel le plan d'objet (9) et le plan d'image intermédiaire (10) forment un angle allant de 0° à moins de 90° avec un axe optique (8) du système de transmission, lequel est parallèle aux normales des grandes surfaces de la plaque à plans parallèles (6) et la lentille frontale (1) et la deuxième lentille (2) du système de transmission optique sont configurées pour corriger des aberrations sphériques causées par des positions du plan d'objet (9) non-parallèles à la plaque à plans parallèles (6), et
   - dans lequel l'au moins un objectif de microscope (12) est disposé pour une imagerie hors du ou dans le plan d'image intermédiaire (10) dans le deuxième milieu (7), dans lequel un axe optique de l'au moins un objectif de microscope (12) est perpendiculaire au plan d'image intermédiaire (10) et l'au moins un objectif de microscope (12) est focalisé sur le plan d'image intermédiaire (10).

2. Microscope selon la revendication 1, **caractérisé en ce que** l'ouverture numérique $NA_M$ de l'au moins un objectif de microscope (12) n'est pas supérieure à l'ouverture numérique $NA_O$ du système de transmission optique.

3. Microscope selon la revendication 1 ou 2, **caractérisé en ce que** l'intervalle entre la lentille frontale (1) du système de transmission optique et la plaque à plans parallèles (6) est rempli d'un troisième milieu en tant que milieu d'immersion pour le système de transmission optique, lequel possède de préférence des propriétés de réfraction optique similaires ou identiques à celles du premier milieu (5).

4. Microscope selon la revendication 3, **caractérisé en ce que** le premier milieu (5) et le troisième milieu sont des milieux d'immersion, de préférence de l'eau, de la glycérine ou une huile, et **en ce que** le deuxième milieu (7) est de l'air.

5. Microscope selon l'une des revendications 1 à 4, **caractérisé en ce que** le grossissement du système de transmission optique vaut $M = n_1/n_2 \cdot \xi$, dans lequel $n_1$ est l'indice de réfraction du premier milieu (5), $n_2$ l'indice de réfraction du deuxième milieu (7) et ξ un facteur choisi librement, lequel est de préférence compris entre 0,5 et 2 et plus particulièrement proche de 1.

6. Microscope selon l'une des revendications 1 à 5, **caractérisé en ce que** le système de transmission optique est configuré pour corriger des aberrations sphériques jusqu'à un angle d'ouverture de 83°.

7. Microscope selon l'une des revendications 1 à 6, comprenant un maintien pour accueillir et fixer le système de transmission optique relativement à un support, un plateau à échantillon et/ou un porte-échantillon, dans lequel, pour la mise au point, l'objectif de microscope (12) possède un milieu préférable pour la mise au point interne et/ou est déplaçable le long de son axe optique relativement au système de transmission optique.

8. Microscope selon la revendication 7, **caractérisé en ce que** le maintien est conçu comme barillet doté d'emplacements pour plusieurs systèmes de transmission optique.

9. Microscope selon l'une des revendications 1 à 8, **caractérisé en ce qu'**au moins un objectif de microscope est disposé comme objectif à sec.

10. Microscope selon l'une des revendications 1 à 9, **caractérisé en ce que** l'angle que forme l'axe optique de l'au moins un objectif de microscope (12) avec l'axe optique (8) du système de transmission optique est librement réglable.

11. Microscope selon l'une des revendications 1 à 10, **caractérisé en ce que** l'axe optique de l'au moins un objectif de microscope (12) forme avec l'axe optique (8) du système de transmission optique un angle différent de zéro et l'au moins un objectif de microscope (12) peut pivoter par rapport au système de transmission optique autour de l'axe optique (8) de celui-ci.

12. Microscope selon l'une des revendications 1 à 11, lequel est disposé comme microscope à lame de lumière, doté d'un premier objectif de microscope disposé comme objectif d'illumination (13) pour illuminer l'échantillon (4) avec une lame de lumière, et d'un deuxième objectif de microscope disposé comme objectif de détection (14) pour détecter la lumière rayonnant de la zone (3) de l'échantillon (4), dans lequel les axes optiques de l'objectif d'illumination (13) et de l'objectif de détection (14) forment un angle différent de zéro, de préférence de 90°, dans lequel le système de transmission optique est agencé entre l'objectif d'illumination (13) et l'objectif de détection (14) d'une part et le porte-échantillon d'autre part.

13. Microscope selon la revendication 12, **caractérisé en ce que** les axes optiques de l'objectif d'illumination (13), du système de transmission optique et de l'objectif de détection (14) sont situés dans un plan.

14. Microscope selon l'une des revendications 12 ou 13, à moins d'un renvoi à la revendication 12, **caractérisé en ce que** l'axe optique (15) de l'objectif de détection est fixé relativement à l'axe optique (8) du système de transmission optique et l'objectif d'illumination (13) peut pivoter, par rapport à l'axe optique de l'objectif de détection (14), relativement autour de celui-ci.

15. Microscope selon l'une des revendications 12 ou 14, **caractérisé en ce que** l'axe optique (16) de l'objectif d'illumination (13) s'étend dans un premier plan avec l'axe optique (8) du système de transmission optique, et l'axe optique (15) de l'objectif de détection (14) s'étend dans un deuxième plan avec l'axe optique (8) du système de transmission optique, ce deuxième plan coupant le premier plan avec un angle prédéfini, de préférence 120°, comprenant un troisième objectif de microscope, dont l'axe optique s'étend dans un troisième plan avec l'axe optique (8) du système de transmission optique, ce troisième plan coupant le premier et le deuxième plan avec un angle prédéfini, de préférence également 120°, dans lequel les axes optiques de l'objectif d'illumination (13), de l'objectif de détection (14) et du troisième objectif de microscope sont perpendiculaires l'un à l'autre, de préférence par paires, comprenant de préférence en outre une commande, avec laquelle les premier, deuxième et troisième objectifs de microscope sont utilisables selon le choix en tant qu'objectif d'illumination ou qu'objectif de détection.

16. Microscope selon l'une des revendications 12 à 15, comprenant un barillet d'objectifs, sur lequel l'objectif d'illumination (13) et l'objectif de détection (14) sont agencés, et sur lequel un objectif de microscope supplémentaire est agencé, dans lequel dans une première position du barillet à objectifs, où l'objectif d'illumination (13) et l'objectif de détection (14) sont pivotés dans le chemin d'onde, le microscope est utilisable comme microscope à lame de lumière, et dans une deuxième position, où seul l'objectif de microscope supplémentaire est pivoté dans le chemin d'onde, est utilisable dans un mode d'utilisation supplémentaire.

**17.** Microscope selon la revendication 16, **caractérisé en ce que** l'axe optique de l'objectif de microscope supplémentaire coïncide avec l'axe optique du système de transmission optique dans la position pivotée dans le chemin d'onde, et l'objectif de microscope supplémentaire est de préférence configuré comme objectif à champ large avec un grossissement dans une plage allant jusqu'à 20 ou comme objectif avec un angle d'ouverture de plus de 60°.

Fig.1

Fig.2

Fig.3

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012110488 A2
- WO 2012112027 A2
- DE 10257423 A1
- WO 2004053558 A1
- DE 102013107297
- US 20110261446 A1
- US 4412723 A
- DE 102013105586

**In der Beschreibung aufgeführte Nicht-Patentliteratur**

- **J.HUISKEN et al.** Selective Plane Illumination Microscopy Techniques in Developmental Biology. *Zeitschrift Development,* 2009, vol. 136, 1963